# NEUE EUROPÄISCHE PATENTSCHRIFT

(11) **EP 0 985 646 B2**
(45) Veröffentlichungstag und Bekanntmachung des Hinweises auf die Entscheidung über den Einspruch: **22.04.2009**
(45) Hinweis auf die Patenterteilung: 23.04.2003
(21) Anmeldenummer: 99117618.1
(22) Anmeldetag: 07.09.1999
(51) Int. Cl.: C04B 28/02, C04B 14/06, C04B 14/16, C04B 22/06, C04B 14/18, C04B 14/20

(54) **Dünnbettmörtel**
Thin bed mortar
Mortier de collage mince

(30) Priorität: 09.09.1998 DE 19841054
(43) Veröffentlichungstag der Anmeldung: 15.03.2000
(73) Patentinhaber: Tubag Trass-, Zement- und Steinwerke GmbH, 56638 Kruft (DE)
(72) Erfinder: Simon, Walter W., 56743 Mendig (DE); Hamann, Dietmar, 49078 Osnabrück (DE)
(74) Vertreter: Gesthuysen, von Rohr & Eggert

(56) Entgegenhaltungen:
- EP-A- 0 428 431
- EP-A1- 0 639 679
- DE-A- 4 405 796
- DE-A- 4 443 907
- DE-A1- 3 420 462
- DE-A1- 3 433 543
- DE-A1- 4 405 796
- DE-A1- 4 443 907
- DE-A1- 19 540 273
- DE-C- 4 218 143
- DE-C1- 4 218 143
- DE-C5- 10 941 054
- DE-U- 29 816 149
- NL-C- 1 005 019
- Eingabe der Patentinhaberin an das Deutsche Patent- und Markenamt vom 28.Juli 2002
- DIN 1053
- DIN 4226
- Aufrechterhaltungsbeschluss des Bundespatentgerichts vom 5.Juli 2005 in Sachen des parallelen Einspruchs gegen das prioritätsbegründende deutsche Patent 109 41 054.

## Beschreibung

Die Erfindung betrifft einen Mörtel zur Erstellung von Mauern aus Planblocksteinen mit einer Fugenstärke von 1 bis 3 mm. Ein solcher Mörtel wird Dünnbettmörtel genannt. Die Erfindung betrifft sowohl den Trockenmörtel als auch die mit Wasser angemachte Mörtelmischung.

Planblocksteine besitzen im Gegensatz zu konventionellen Mauersteinen eine hohe Maßhaltigkeit hinsichtlich der Steinabmessungen (im Bereich von ca. 1 mm). Der bei der Vermauerung von Planblocksteinen, d.h. bei der Erstellung eines Mauerwerkes mit solchen Steinen, übliche Spalt zwischen den einzelnen Steinen ist daher sehr viel geringer: Während bei üblichen Mauersteinen Spaltbreiten, die durch den Mauermörtel ausgefüllt werden, von 1 bis 2 cm üblich sind - wodurch auch der Ausgleich von Ungenauigkeiten im Millimeterbereich möglich ist - ist dieser Spalt bei der Vermauerung von Planblocksteinen meist nur 1 bis 3 mm (Dünnbettmörtelverfahren). Deshalb ist es üblich wegen der geringen Fugenstärke auch von einem "Verkleben" der Steine zu reden. Planblocksteine sind zwecks Gewichts- und Materialeinsparung sowie zur Verbesserung der Wärmedämmung und Schallisolation häufig mit Hohlräumen versehen. Diese sog. Mehrkammersteine weisen mitunter eine Vielzahl von Luftkammern auf (z.B. 2, 4 oder 9 Kammern), die den Stein nicht nur leichter machen und Material einsparen, sondern auch die Wärmedämmung erhöhen. Die Abmessungen der Luftkammern ergeben sich dabei nach der DIN 18148, 18151 und 18153. Die Mehrkammersteine können aus Bims, Beton, Kalksandstein oder Ziegeln bestehen. Die Hohlkammern sind bevorzugt vertikal angeordnet.

Durch die Anwesenheit der Hohlräume in der fertigen Wand wird eine besonders gute Wärmedämmung erzielt. Die Anwendung solcher Steine mit vertikal angeordneten Hohlräumen in Kombination mit Fugen mit einer Dicke von 1 bis 3 mm führt zu Wänden mit einer im Vergleich zu sonstigen Systemen unschlagbaren Wärmeisolation und geht mit einer Gewichts- und Materialersparnis einher. Eine Voraussetzung dabei ist jedoch die Vermeidung von durchgehenden Hohlräumen in der Wand, insbesondere wenn sich dabei über die gesamte Mauerhöhe erstreckende Hohlkammern bilden, da in solchen kaminartigen Hohlräumen unerwünschte Luftbewegungen zustandekommen können, die teilweise die gute Wärmedämmung zunichte machen. Aus diesem Grunde ist es somit erwünscht, beim Aufmauern jeweils den Hohlraum an der Oberfläche der Steine abzuschließen.

Lagerfugen stellen in Mauern grundsätzlich Kältebrücken dar und dieser Nachteil wird naturgemäß bei dünneren Fugen geringer. Die Anwendung von Dünnbettmörtel ermöglicht somit die Herstellung von Mauerwerken mit guten Isoliereigenschaften. Ein weiterer Vorteil ist die Tatsache, daß das Vermauern mit Dünnbettmörtel wesentlich schneller durchgeführt werden kann. Nach dem Auftragen des Mörtels auf eine Steinschicht mit einer Zahnkelle als Kammbett folgt sofort das Setzen der nächsten Steinlage.

Bei der Verwendung von Dünnbettmörtel besteht wegen der dünnen Fugen aber nur eine eingeschränkte Möglichkeit, die vorhandenen Maßtoleranzen der Steine mit einer Änderung der Fugendicke zu korrigieren. Bei einer Dicke der Fuge von ca. 5 bis · 12 mm können Unebenheiten im Steinformat bis zu 3 mm problemlos korrigiert werden, wohingegen eine Fuge von 1 bis 3 mm solche Unterschiede der Steingröße nicht mehr auffangen kann. Die für die Erstellung einer maßgenauen Wand erforderliche Präzisionsarbeit kann in der Regel nur von einer dafür qualifizierten Fachkraft ausgeführt werden.

In der DE 42 18 143 C wird ein sogenannter Schmalfugenmörtel zur Erstellung von Steinmauerwerken mit einer Fugenstärke zwischen 3 und 12 mm vorgeschlagen, der einen unter mechanischer Krafteinwirkung zerstörbaren körnigen Zuschlag aus glasig-porösem Material mit einem Kornanteil aufweist, dessen mittlerer Durchmesser größer ist, als die Dicke der auszubildenden Mörtelfuge. Dieser Mörtel enthält keinen Sand. Nach Auftrag des Mörtels werden durch leichtes Klopfen auf die Steine der nächsten Steinreihe die das Fugenmaß übersteigenden Anteile des Leichtzuschlages zertrümmert, ohne daß der Mörtel seitlich zwischen den Steinen herausquillt. Aufgrund der Kornzertrümmerung des "Überkorns" des Leichtzuschlages lassen sich auch übliche Maßtoleranzen der Steine ausgleichen.

Die DE 44 43 907 A beschreibt ein Verfahren zum Erstellen eines Mauerwerks aus Planziegeln mit senkrechten Hohlräumen und einem Dünnbettmörtel mit Zuschlagsstoffen, die eine zerbrechliche räumliche Struktur aufweisen, so daß beim Aufeinandersetzen der Planziegel zunächst ein Teil des aufgetragenen Mörtels ausgedrückt und in der verbleibenden Mörtelmenge die räumliche Struktur von den Stegen zwischen den Hohlräumen der Planziegel zerbrochen wird, hingegen im Bereich der Hohlräume erhalten bleibt. Der Dünnbettmörtel besteht aus Portlandzement, Sand, Zusätzen und Leichtzuschlag, z.B. Perlite, im Größenspektrum zwischen 0 und 3 mm.

Beiden Dokumenten ist gemeinsam, daß der Mörtel einen Leichtzuschlag enthält, der größer ist, als der mittlere Durchmesser der auszubildenden Fuge. Weil das Zuschlaggrößtkorn in beiden Fällen unter mechanischer Krafteinwirkung zerstörbar ist und auch wenigstens partiell, d.h. an bestimmten Stellen zerstört werden soll, ist der Mörtel sehr wohl verwendbar, obgleich das Zuschlaggrößtkorn größer ist als die mittlere Fugendicke. Erfindungsgemäß wird hingegen die Sieblinie bzw. die Größe des Leichtzuschlags ausdrücklich so gewählt, daß sie kleiner ist als die mittlere Fugendicke.

Ein weiterer Aspekt beim Mauern mit Hochlochsteinen ist außerdem die Notwendigkeit weitestgehend zu verhindern, daß der Mörtel in die Löcher fällt, weil sich Material in den Löchern oder Kammern nachteilig auf die Wärme- und Schallisolierung der Steine auswirkt.

Nach der DE-OS 44 05 796 wurde dieses Problem dadurch gelöst, daß unmittelbar auf den Steinen ein Gewebestreifen angebracht wurde, welcher das Hineinfallen von Mörtelmaterial verhinderte und die Hohlkammer in den Steinen oben abschloß und daß erst danach der Mörtel aufgetragen wurde. Durch diese Anwendung war es möglich, den üblichen, stark fließenden Dünnbettmörtel zu verwenden, ohne damit rechnen zu müssen, daß ein erheblicher Teil des aufgetragenen Mörtels in der Hohlkammer landet. Nachteilig bei diesem Verfahren ist jedoch die Tatsache, daß beim Vermayern das Anbringen des Gewebestreifens eine weitere Handlung darstellt, welche sich hinsichtlich Zeit und Material negativ auswirkt.

Es war die Aufgabe der vorliegenden Erfindung, einen Dünnbettmörtel zur Verfügung zu stellen, welcher möglichst universal einsetzbar ist, d.h. geeignet ist, bei Flachziegeln sowie bei Mauersteinen mit Hohlkammern oder Hohlräumen verwendet zu werden. Ganz entscheidend ist die Forderung, daß ein Mörtel zur Verfügung gestellt wird, welcher das Problem der Lochüberbrückung löst, mit anderen Worten eine stabile Schicht bildet, welche ohne weitere Hilfsmittel trotz Anwendung als schmale Fuge die Hohlkammer oder Hohlräume oben abschließt.

Die Aufgabe wird durch einen Mörtel mit den kennzeichnenden Eigenschaften des Anspruchs 1 gelöst.

Der Trocken-Dünnbettmörtel enthält Bindemittel, Zuschlag und Zusätze.

Als Bindemittel kommen übliche anorganische Bindemittel wie Portlandzement in Betracht. Alternativ können andere Zementtypen oder hydraulische Asche verwendet werden oder eine Mischung von Portlandzement mit diesen Produkten.

Der Zuschlag besteht erfindungsgemäß aus einem dichten Gestein und einem porigen wasseransaugenden Leichtzuschlag, d.h. eine Mischung körniger Produkte.

Mit dichtem Gestein sind solche Produkte gemeint, die kein Wasser aufnehmen und eine solch hohe Stabilität aufweisen, daß sie bei normaler Verarbeitung beim Vermauern weder zerstörbar noch zusammendrückbar sind. Es kommen hierfür z.B. Sand und Kalzit in Betracht. Es wird im Rahmen der Erfindung jedoch bevorzugt, Quarzsand zu verwenden.

Um eine befriedigende Festigkeit des Mörtels zu erzielen, muß ein gewisses Siebspektrum des dichten Gesteins eingehalten werden. Es wird im Rahmen der vorliegenden Erfindung bevorzugt, ein Siebspektrum von 0 bis 1 mm einzuhalten, insbesondere wenn der bevorzugte Quarzsand verwendet wird.

Die zweite Komponente des Zuschlages ist ein poriger wasseransaugender Leichtzuschlag. Mit Leichtzuschlag sind Produkte gemeint, die eine Schüttdichte aufweisen, die wesentlich geringer ist als die Schüttdichte der anderen Komponente in der Mischung des dichten Gesteins. Wird als dichtes Gestein Sand mit einer Schüttdichte von z.B. 1.500 kg/m³ benutzt, so kann die Schüttdichte des Leichtzuschlages mit 350 kg/m³ angegeben werden. Entscheidend im Rahmen der vorliegenden Erfindung ist die Eigenschaft des Leichtzuschlages, daß er porig und wasseransaugend ist.

Geeignete Leichtzuschläge im Rahmen der vorliegenden Erfindung sind glasigporöse Werkstoffe wie geblähter Perlit, Vermiculit, Bims und Schaumglas, gebrochenes Foamglas, Blähton und Blähschiefer. Bevorzugt werden Perlit, Vermiculit und Bims, insbesondere der Bims wegen seiner wasseransaugenden Wirkung.

Das Verhältnis der beiden Komponenten im Zuschlag stellt ein wichtiges Merkmal der vorliegenden Erfindung dar. Es hat sich überraschend herausgestellt, daß der Trocken-Dünnbettmörtel gerade dann die günstigste Wirkung zeigt, wenn der Anteil des Leichtzuschlages nicht mehr als 15 Vol.-% beträgt, d.h. der Anteil des dichten Gesteins in der Kombination mehr als 85 Vol.-% beträgt. Bei einem Anteil an Leichtzuschlag von über 15 Vol.-% wird eine zu starke wasseransaugende Wirksamkeit des Mörtels festgestellt, was zu einer Verminderung der Verarbeitbarkeit führt. Bei einem Dünnbettmörtel, welcher den erfindungsgemäßen Zuschlag aufweist, werden die besonders günstigen Eigenschaften beim Vermauern von Steinen jeglicher Art im Dünnbettmörtelverfahren festgestellt. Die aufgebrachte Mörtelschicht mit einer Dicke von 1 bis 3 mm mit dem erfindungsgemäßen Zuschlag krallt sich praktisch sofort an der Oberfläche der Steine fest, wobei es keine Rolle spielt, welche Art von Stein benutzt wird. Es überrascht ganz besonders, daß dieses "Festkrallen" genauso wirksam und gründlich bei Hochlochmehrkammersteinen beobachtet wird. Diese Wirkung ist besonders erwünscht, weil dieser Effekt dazu führt, daß auch die nach oben offenen Kammern trotz der geringen Dicke der Mörtelschicht vollständig abgedeckt werden. Der erürndungsgetnäße Mörtel erlaubt somit eine stabile Abdeckung der Steine, die auch im Bereich der Hohlkammern plan bleibt und nicht in die Öffnungen durchhängt. Hierdurch unterbleibt vollständig, daß die Abdeckung sogar reißt und dabei in den Hohlraum tropft oder hineinfällt. Das hätte den Nachteil, daß die Hohlkammern einer Steinlage nicht mehr abgeschlossen wären und dadurch sich über mehrere Steinhöhen erstreckende Hohlräume entstehen und daß durch das Hineinfallen des Mörtels in die Öffnung der Steine diese partiell verfüllt werden, was nicht nur einen Materialverlust darstellt, sondern auch zu einer Verschlechterung der Wärme- und Schalldämmung der Mauer führt.

Es ist ein weiteres Merkmal der vorliegenden Erfindung, daß das Größtkorn des Zuschlags im Trocken-Dünnbettmörtel der mittleren Fugendicke entspricht.

Auch wenn beim Bauen von weitgehend identischen Steinen ausgegangen wird, werden die verwendeten Steine Maßabweichungen aufweisen und somit wird immer noch eine gewisse Maßtoleranz auszugleichen sein. Bei der Anwendung von Dünnbettmörtel mit einer Fugendicke von bis zu 3 mm ist nur eine sehr geringe Maßtoleranz akzeptabel, da größere Abweichungen mit diesen Fugendicken nicht mehr ausgeglichen werden können. Bei einer minimalen Fugendicke von 1 mm wird somit die mittlere Fugendicke etwa 2 mm betragen. Sollte beim Vermauern eine andere Fugendicke vorliegen, ändert sich die mittlere Fugendicke entsprechend.

Beide Komponenten des Zuschlages, das dichte Gestein sowie der Leichtzuschlag, weisen eine gewisse Verteilung ihrer Teilchengröße auf, was mit Sieblinie bezeichnet wird. Bei dichtem Gestein liegt üblicherweise eine Teilchengröße von unter 1 mm vor, im Rahmen der Erfindung wird bevorzugt Quarzsand mit einer Teilchengröße von bis zu 0,7 mm verwendet, ein größerer Bereich kommt ebenso in Betracht, sowie auch die Möglichkeit, eine Mischung von Sand mit zwei unterschiedlichen Sieblinien zu verwenden. Eine Verwendung von dichtem Gestein mit einer Teilchengröße im Bereich der Fugendicke kann deswegen nicht in Betracht kommen, weil durch die Eigenschaften des dichten Gesteins seine Teilchengröße die minimale Fugendicke unveränderbar vorgibt. Es ist demgegenüber einer der Vorteile der Anwendung von Leichtzuschlägen, daß ihre Eigenschaften ein gewisses Zusammendrücken ermöglichen und darüber hinaus das im Stand der Technik bekannte und häufig benutzte Zerstören der Partikel des Leichtzuschlages beim Vermauern möglich ist. Aus diesem Grunde stellt der Leichtzuschlag in dem erfindungsgemäßen Dünnbettmörtel die größeren Partikel dar. Das Merkmal der Erfindung, daß das Größtkorn des Zuschlages der mittleren Fugendicke entspricht, wird somit üblicherweise auf den Leichtzuschlag zutreffen. Folglich weist der verwendete Leichtzuschlag eine Verteilung der Teilchengröße auf, welche bis zur mittleren Fugendicke reicht. In dem vorstehend genannten Beispiel, mit einer mittleren Fugendicke von etwa 2 mm, wird das Größtkorn des Leichtzuschlages im erfindungsgemäßen Zuschlag 2 mm betragen. Somit kann man z.B. einen Leichtzuschlag mit einer Sieblinie von 0 bis 2,0 mm verwenden, mehr bevorzugt wird ein Leichtzuschlag mit einer Sieblinie von 0,3 bis 2 mm. Ebenso kommt eine Verwendung einer Mischung von mindestens zwei Typen von Leichtzuschlägen mit unterschiedlichen Sieblinien in Betracht. Dabei sind die Typen der Leichtzuschläge nach der gewünschten Anwendung zu selektieren. Bei einer solchen Mischung von mindestens zwei Typen von Leichtzuschlägen werden häufig unterschiedliche Sieblinien des gleichen Grundmaterials ausgewählt werden, wie z.B. zwei Perlit-Präparationen mit einer unterschiedlichen Größenverteilung. Es kommt im Rahmen der Erfindung ebenso eine Mischung von zwei Präparationen unterschiedlichen Grundmaterials in Betracht.
Durch die Beschränkung des Größtkorns des Leichtzuschlags wird weitgehend vermieden, daß beim Vermauern der Steine der Zuschlag zusammengedrückt oder zerstört werden muß.

Wie später in der Beschreibung noch eingehend ausgeführt wird, ist der erfindungsgemäße Dünnbettmörtel überraschenderweise geeignet, bei Steinen aller Art, insbesondere Mehrkammerhochlochsteinen verwendet zu werden, weil eine Fuge des angemachten Dünnbettmörtels bis zu 3 mm völlig ausreicht, um eine stabile, die Hohlkammer abdeckende Schicht zu erzielen.

Der Trocken-Dünnbettmörtel gemäß der Erfindung weist neben Zuschlag und Bindemittel weitere Zusätze auf. Solche Zusätze sind im Stand der Technik bekannt. Sie können Verflüssiger, Luftporenbildner, Stabilisatoren, Verzögerer oder Erhärtungsbeschleuniger, Zusätze zur Einstellung des Wasserrückhaltevermögens und Zusätze zur Erhöhung des Haftverbundes umfassen.

Als Verflüssiger eignen sich besonders Naphthalinsulfonat und polymerisiertes Melaminsulfonat.

Als Luftporenbildner kommen Tenside, wie beispielsweise Olefinsulfonat oder Natriumlaurylsulfat, in Betracht. Solche Luftporenbildner bewirken eine Erniedrigung der Rohdichte und ermöglichen eine bessere Verarbeitung.

Für die Zwecke der Erfindung geeignete Stabilisatoren sind beispielsweise Hydroxypropylstärke, Stärkeether oder sulfonierte Melamin-Polykondensate.

Verzögerer, die sich als Zusatz zum erfindungsgemäßen Mörtel eignen sind meist auf Basis von Zuckern hergestellt.
Je nach den Erfordernissen der Steine oder der Zuschläge kann es zweckmäßig sein, auch Erhärtungsbeschleuniger, wie z.B. anorganisch-hydraulische Binderpräparate, basierend auf geschmolzenem oder gesintertem Calciumaluminatklinker, zu verwenden.

Als Zusätze zur Einstellung des Wasserrückhaltevermögens eignen sich insbesondere Celluloseether, wie Methylhydroxyethylcellulose oder Mischungen aus Methylcellulosederivaten mit organischen und anorganischen Additiven, und ferner modifizierte Cellulose.

Als Zusätze zur Erhöhung des Haftverbundes kommen Dispersionspulver auf der Basis von Vinylacetat/Ethylen- oder Vinylacetat/Vinylester/Acrylsäureester- oder Vinylacetat/Vinylversatat-Butylacrylat-Copolymeren oder Fasern, z.B. "Cem-Fil 2"-Glasfasern in Betracht. Es ist aber einer der wesentlichen Punkte des erfindungsgemäßen Mörtels, daß seine Haftung mit dem jeweils benutzten Stein eine so hohe Qualität aufweist, daß der zusätzliche Einsatz Fasern für die ordnungsgemäße Wirkung der erfindungsgemäßen Zusammensetzung kein wesentliches Erfordernis darstellt.

Der Trocken-Dünnbettmörtel weist gemäß einer bevorzugten Ausführungsform der Erfindung die folgende Zusammensetzung auf:

| | |
|---|---|
| 300 - 400 kg | Portlandzement, |
| 10 - 50 kg | Kalk, |
| 510 - 800 kg | Sand, |
| 10 - 40 kg | Leichtzuschlag und |
| 0,5 - 10 kg | Zusätze. |

Es ist eine besonders bevorzugte Ausführungsform der Zusammensetzung für den Sand, gemäß der vorstehenden konkreten Rezeptur, Sand mit einer Sieblinie von 0 bis 1,0 mm zu verwenden und für den Leichtzuschlag Leichtzuschlag mit einer Sieblinie von 0 - 2,0 mm zu verwenden.

Der Trocken-Dünnbettmörtel wird mit Wasser zu einer verarbeitungsgerechten Konsistenz angerührt. Dazu wird eine bestimmte Menge des Trocken-Dünnbettmörtels mit einer bestimmten Menge Wasser verrührt und zwar solange bis eine angemachte Mörtelmischung mit gleichbleibenden Eigenschaften vorliegt. Dabei ist von besonderer Bedeutung, daß eine maximale Wassermenge nicht überschritten wird, da ansonsten die strukturviskosen Eigenschaften des Mörtels verlorengehen.

Der erfindungsgemäße Mörtel ist in seiner Anwendung nicht auf bestimmte Steintypen beschränkt. Er kann bei unterschiedlichen Steinen, wie Ziegeln, Kalksandsteinen, Leichtbetonsteinen, Betonsteinen und Steinen aus Porenbeton verwendet werden.

Es ist im Rahmen der vorliegenden Erfindung beobachtet worden, daß die erfindungsgemäße Mörtelzusammensetzung sich gerade dann optimal für die Weiterverarbeitung beim Vermauern eignet, wenn je nach Saugverhalten der Steine etwa 100 kg der Trockenmischung mit 25 bis 30 kg Wasser gemischt werden. Das Mischen selber wird nach an sich bekannten Verfahren durchgeführt. Wird bei der Zubereitung eine größere Menge Wasser benutzt, wird eine zu flüssige Konsistenz des angemachten Mörtels erzielt, der sich für die Anwendung weniger eignet. Bei einer geringeren Menge Wasser ist die angemachte Mischung zu dick und läßt sich schlecht weiterverarbeiten.

Welches Mischverhältnis von Wasser zu Trockenmischung bei der jeweiligen Anwendung jeweils gewählt wird, ist von verschiedenen Faktoren abhängig, wobei der Steintyp und dann insbesondere das Steinmaterial und die Ausführung, z.B. mit oder ohne Hohlkammern, eine Rolle spielen. So stellt das Saugverhalten des Steins eine wichtige Größe dar. Ist der Mörtel für ein Vermauern mit Porenbetonsteinen gedacht, wird eine relativ große Menge Wasser innerhalb des vorstehend angegebenen Bereichs gewählt werden, wohingegen eine Anwendung bei Ziegelsteinen eine Menge Wasser erforderlich macht, die sich eher im niedrigen Abschnitt des vorstehend angegebenen Bereichs befindet.

Es kommt im Rahmen der vorliegenden Erfindung besonders auf eine bestimmte Viskosität des angemachten Mörtels an, da dies Voraussetzung für eine zufriedenstellende Haftung des Mörtels an den Steinen ist. Auch die Anwendung bei Hochlochsteinen, bei denen die Mörtelschicht die Löcher abdecken soll, ist nur dann möglich, wenn die Mörtelmischung mit einer bestimmten Viskosität zubereitet wird.

Dünnbettmörtel ist übrigens üblicherweise plastischer und fließfähiger als üblicher Mörtel. In der erfindungsgemäßen Mörtelzusammensetzung ist es insbesondere der Anteil des Leichtzuschlags, der durch sein Saugverhalten der Zusammensetzung seine überragenden Eigenschaften verschafft und ein optimales Aussteifen gewährleistet.

Zum Aufbringen der Mörtelschicht auf die Steinoberfläche können bekannte Mörtelauftragsschlitten eingesetzt werden. Vorzugsweise kommen Mörtelauftragsschlitten zum Einsatz, die in der DE 297 18 544 U1 bzw. in der DE 298 11 865.3 U1 beschrieben sind. Dadurch kann die Aufbringung eines Dünnbettmörtels in besonders einfacher und genauer Weise erfolgen.

Die Erfindung wird anhand der nachfolgend aufgeführten Beispiele näher erläutert.

Bei diesen nachfolgenden Beispielen wird die einzuhaltende Viskosität aufgeführt. Dieser Parameter spielt für die Anwendung des erfindungsgemäßen Mörtels eine große Rolle und eine ausgeprägte standardisierte Zubereitung des Mörtels sowie eine ständige Überwachung der richtigen Viskosität ist von Bedeutung.

Die Messung der Viskosität kann mit Hilfe eines Haake VT 500 Viskosimeters durchgeführt werden, unter Anwendung eines Meßgefäßes mit einem Durchmesser von ca. 7 cm und eines Meßzapfens Typ RF 808-1301. Der zu untersuchende Mörtel wird in einem geeigneten Mischer, z.B. einem Hobart (DIN)-Mischer, in eine verarbeitungsgerechte Konsistenz aufgemischt. Dazu wird der Mörtel 45 Sekunden bis 1 Minute bei Stufe 1 und anschließend 15 Sekunden bei Stufe 2 verrührt, danach 2,5 Minuten zum Reifen in Ruhe gelassen und zum Schluß mit der Hand aufgerührt. Das Meßgerät wird bis zum oberen Rand mit dem Frischmörtel aufgefüllt.

Das Viskosimeter wird im Stativ eingehängt und eingeschaltet. Es wird eine Drehgeschwindigkeit 4 gewählt und die Digitalanzeige wird auf Programm 4 eingestellt. Die Meßeinheit wird auf Ncm eingestellt und zum Schluß der Vorbereitung wird der Meßzapfen im Viskosimeter eingeschraubt.

Der Meßzapfen wird vollständig in das Meßgefäß eingetaucht und das Gerät wird eingeschaltet. Es wird sofort eine Zahl in der Digitalanzeige angezeigt und der Meßzapfen fängt an, sich im Mörtel zu drehen. Sollte der Mörtel eine zu hohe Viskosität aufweisen, schaltet sich das Gerät automatisch ab.

Nach 1 Minute wird der Meßwert in der Digitalanzeige abgelesen.

Im Rahmen der erfindungsgemäßen Mörtelzusammensetzungen ist ein Viskositätswert von 0,8 - 1,2 Ncm einzuhalten.

### Beispiel 1: Zusammensetzung eines Dünnbettmörtels für die Verarbeitung von Porenbetonsteinen

| | |
|---|---|
| 300 kg | Portlandzement, |
| 10 kg | Kalk, |
| 10 kg | Leichtzuschlag, |
| 680 kg | Sand, dicht, 0 - 1,0 mm und |
| 4,5 kg | Dispersionspulver, Methylcellulose und Stabilisator |

Diese Mörtelmischung wurde in einem Mischungsverhältnis von 27,5 kg Wasser zu 100 kg Mörtel aufgemischt. Nach dem Aufmischen soll in der angemachten Mischung eine Viskosität von 0,8 Ncm vorliegen.
Bei dieser Zusammensetzung wurde als Leichtzuschlag Bims benutzt, es kann aber auch ein anderer Leichtzuschlag verwendet werden.

### Beispiel 2: Zusammensetzung eines Dünnbettmörtels für die Verarbeitung eines Mehrkammerziegelsteins

| | |
|---|---|
| 380 kg | Portlandzement, |
| 50 kg | Kalk, |
| 25 kg | Leichtzuschlag, |
| 645 kg | Sand, dicht, 0 - 1,0 mm und |
| 8 kg | Dispersionspulver, Methylcellulos Stabilisator, Verzögerer, Fasern, Verflüssiger |

Diese Mörtelmischung wurde in einem Mischungsverhältnis von 25,5 kg Wasser zu 100 kg Mörtel aufgemischt. Nach dem Aufmischen soll in der angemachten Mischung eine Viskosität von 1,15 Ncm vorliegen.
Bei dieser Zusammensetzung wurde als Leichtzuschlag Bims benutzt, es kann aber auch ein anderer Leichtzuschlag verwendet werden.

### Beispiel 3: Zusammensetzung eines Dünnbettmörtels für die Verarbeitung von Ziegelsteinen

| | |
|---|---|
| 350 kg | Portlandzement, |
| 25 kg | Kalk, |
| 24 kg | Perlite, |
| 565 kg | Sand, dicht, 0 - 0,5 mm, |
| 60 kg | Sand, dicht, 0,4 - 0,63 mm und |
| 8 kg | Dispersionspulver, Methylcellulose, Stabilisator, Erhärtungsbeschleuniger |

Diese Mörtelmischung wurde in einem Mischungsverhältnis von 25,5 kg Wasser zu 100 kg Mörtel aufgemischt. Nach dem Aufmischen soll in der angemachten Mischung eine Viskosität von 1,15 Ncm vorliegen.
Bei dieser Zusammensetzung wurde als Leichtzuschlag Bims benutzt, es kann aber auch ein anderer Leichtzuschlag verwendet werden.

### Beispiel 4: Zusammensetzung eines Dünnbettmörtels für den Einsatz von Ziegelsteinen

| | |
|---|---|
| 350 kg | Portlandzement, |
| 25 kg | Kalk, |
| 12 kg | Leichtzuschlag (Bims, 0,3 - 1,7 mm), |
| 12 kg | Leichtzuschlag (Bims, 1,5 - 2,0 mm), |
| 625 kg | Sand, dicht, 0 - 1,0 mm und |
| 8 kg | Dispersionspulver, Methylcellulose, Stabilisator, Erhärtungsbeschleuniger, Luftporenbildner und Fasern |

Diese Mörtelmischung wurde in einem Mischungsverhältnis von 25,5 kg Wasser zu 100 kg Mörtel aufgemischt. Nach dem Aufmischen soll in der angemachten Mischung eine Viskosität von 0,95 Ncm vorliegen.

## Patentansprüche

1. Trocken-Dünnbettmörtel, enthaltend Zement, Zusätze und Zuschlag aus dichtem Gestein und porigem wasseransaugendem Leichtzuschlag,
**dadurch gekennzeichnet,**
**daß** das dichte Gestein ein Siebspektrum von 0 bis 1 mm hat und sein Anteil im Zuschlag zwischen 85 und 95 Vol.-% beträgt und
**daß** der porige wasseransaugende Leichtzuschlag eine Verteilung der Teilchengröße aufweist, die bis zur mittleren Dicke der Lagerfugen von 1-3 mm Stärke reicht.

2. Trocken-Dünnbettmörtel nach Anspruch 1, **dadurch gekennzeichnet, daß** der porige wasseransaugende Leichtzuschlag aus der Gruppe von geblähtem Perlit, Vermiculit, Bims, Schaumglas, zerbrochenem Foamglas, Blähton und Blähschiefer gewählt ist.

3. Trocken-Dünnbettmörtel nach Anspruch 1 oder 2, **dadurch gekennzeichnet, daß** der porige wasseransaugende Leichtzuschlag aus der Gruppe von Perlit, Vermiculit und Bims ausgewählt ist.

4. Trocken-Dünnbettmörtel nach einem der Ansprüche 1 bis 3, **dadurch gekennzeichnet, daß** das Größtkorn des Leichtzuschlags der mittleren Fugendicke entspricht.

5. Trocken-Dünnbettmörtel nach einem der Ansprüche 1 bis 4, **dadurch gekennzeichnet, daß** der Zuschlag aus dichtem Gestein aus Quarzsand besteht.

6. Trocken-Dünnbettmörtel nach einem der Ansprüche 1 bis 5, **dadurch gekennzeichnet, daß** der Quarzsand eine Teilchengröße bis zu 1 mm, vorzugsweise bis zu 0,7 mm, aufweist.

7. Trocken-Dünnbettmörtel nach einem der Ansprüche 1 bis 6, **dadurch gekennzeichnet, daß** der Mörtel einen Zusatz zur Einstellung des Wasserrückhaltevermögens enthält.

8. Trocken-Dünnbettmörtel nach einem der Ansprüche 1 bis 7, **dadurch gekennzeichnet, daß** der Mörtel als Zusatz einen Stabilisator enthält.

9. Trocken-Dünnbettmörtel nach einem der Ansprüche 1 bis 8, **dadurch gekennzeichnet, daß** der Mörtel als Zusatz einen Verflüssiger und/oder Luftporenbildner und/oder Verzögerer und/oder Erhärtungsbeschleuniger und/oder einen Zusatz zur Erhöhung des Haftverbundes enthält.

10. Trocken-Dünnbettmörtel nach einem der vorherigen Ansprüche, bestehend aus
| | |
|---|---|
| 300 - 400 kg | Portlandzement, |
| 10 - 50 kg | Kalk, |
| 510 - 800 kg | Sand, |
| 10 - 40 kg | Leichtzuschlag und |
| 0,5 - 10 kg | Zusätze. |

11. Angemachte Mörtelmischung, hergestellt durch Zusammenfügen von 100 kg eines Trocken-Dünnbettmörtels nach einem der Ansprüche 1 bis 8 mit 25 bis 30 kg Wasser, je nach Saugverhalten des Steines, und anschließendem ausreichendem Mischen.

12. Angemachte Mörtelmischung nach Anspruch 11 mit einer Viskosität von 0,8 bis 1,2 Ncm, je nach Saugverhalten der damit verbauten Steine.

## Claims

1. Dry thin-bed mortar containing cement, supplements and aggregate made of dense stone and water-absorbent porous light aggregate,
**characterized**
**in that** the dense stone has a screening spectrum of 0 to 1 mm and its proportion in the aggregate is between 85 and 95 % by volume and
**in that** the water-absorbent porous light aggregate has a distribution of the particle size which extends up to the average thickness of the bed joints of a 1 to 3 mm size.

2. Dry thin-bed mortar according to claim 1, **characterized in that** the water-absorbent porous light aggregate is selected from the group of blown perlite, vermiculite, pumice stone, foam glass, shattered foam glass, swelling clay and expanded shale.

3. Dry thin-bed mortar according to claim 1 or 2, **characterized in that** the porous, water-absorbent light aggregate is selected from the group of perlite, vermiculite and pumice stone.

4. Dry thin-bed mortar according to one of the claims 1 to 3, **characterized in that** the maximum grain size of the light aggregate corresponds to the average joint thickness.

5. Dry thin-bed mortar according to one of the claims 1 to 4, **characterized in that** the aggregate comprises dense stone made of silica sand.

6. Dry thin-bed mortar according to one of the claims 1 to 5, **characterized in that** the silica sand has a particle size of up to 1 mm, preferably up to 0.7 mm.

7. Dry thin-bed mortar according to one of the claims 1 to 6, **characterized in that** the mortar contains a supplement for adjusting the water retention value.

8. Dry thin-bed mortar according to one of the claims 1 to 7, **characterized in that** the mortar contains a stabiliser as supplement.

9. Dry thin-bed mortar according to one of the claims 1 to 8, **characterized in that** the mortar contains as a supplement a liquifier and/or air entraining agent and/or retarder and/or hardening accelerator and/or a supplement for increasing the adhesive bond.

10. Dry thin-bed mortar according to one of the preceding claims comprising
| | |
|---|---|
| 300 - 400 kg | Portland cement |
| 10 - 50 kg | lime |
| 510 - 800 kg | sand |
| 10 - 40 kg | light aggregate and |
| 0.5 - 10 kg | supplements. |

11. Prepared mortar mixture produced by combination of 100 kg of a dry thin-bed mortar according to one of the claims 1 to 8 with 25 to 30 kg of water respectively according to the absorption behaviour of the stone and subsequent adequate mixing.

12. Prepared mortar mixture according to claim 11 with a viscosity of 0.8 to 1.2 Ncm respectively according to the adsorption behaviour of the stones used for construction therewith.

## Revendications

1. Mortier de collage mince sec, contenant du ciment, des additifs et un agrégat de pierres denses ainsi qu'un agrégat léger poreux absorbant l'eau,
**caractérisé en ce**
**que** les pierres denses ont un spectre granulométrique de 0 à 1 mm et leur fraction dans l'agrégat vaut entre 85 et 95 % en volume et
**que** l'agrégat léger poreux absorbant l'eau présente une distribution de la taille des particules qui atteint l'épaisseur moyenne des joints d'assise de 1 à 3 mm.

2. Mortier de collage mince sec selon la revendication 1, **caractérisé en ce que** l'agrégat léger poreux absorbant l'eau est choisi dans le groupe comprenant la perlite expansée, la vermiculite, la ponce, le verre cellulaire, le verre expansé concassé, l'argile expansée et le schiste expansé.

3. Mortier de collage mince sec selon la revendications 1 ou 2, **caractérisé en ce que** l'agrégat léger poreux, absorbant l'eau, est choisi dans le groupe comprenant la perlite, la vermiculite et la ponce.

4. Mortier de collage mince sec selon l'une quelconque des revendications 1 à 3, **caractérisé en ce que** le plus gros grain de l'agrégat léger correspond à l'épaisseur moyenne du joint.

5. Mortier de collage mince sec selon l'une quelconque des revendications 1 à 4, **caractérisé en ce que** l'agrégat se compose de pierres denses en sable siliceux.

6. Mortier de collage mince sec selon l'une quelconque des revendications 1 à 5, **caractérisé en ce que** le sable siliceux présente une granulométrie pouvant atteindre 1 mm, de préférence 0,7 mm.

7. Mortier de collage mince sec selon l'une quelconque des revendications 1 à 6, **caractérisé en ce que** le mortier contient un additif pour le réglage du pouvoir de rétention d'eau.

8. Mortier de collage mince sec selon l'une quelconque des revendications 1 à 7, **caractérisé en ce que** le mortier contient comme additif un agent stabilisant.

9. Mortier de collage mince sec selon l'une quelconque des revendications 1 à 8, **caractérisé en ce que** le mortier contient comme additif un agent liquéfiant et/ou un formateur de bulles d'air et/ou un agent retardateur et/ou un accélérateur de prise et/ou un additif destiné à augmenter le collage.

10. Mortier de collage mince sec selon l'une quelconque des revendications précédentes, se composant de
| | |
|---|---|
| 300 - 400 kg | de ciment Portland |
| 10 - 50 kg | de chaux |
| 510 - 800 kg | de sable |
| 10 - 40 kg | d'agrégat léger et |
| 0.5 - 10 kg | d'additifs. |

11. Mélange de mortier gâché préparé par l'assemblage de 100 kg d'un mortier de collage mince sec selon l'une quelconque des revendications 1 à 8 avec 25 à 30 kg d'eau selon de pouvoir d'absorption des blocs et le malaxage suffisant qui suit.

12. Mélange de mortier gâché selon la revendication 11 avec une viscosité de 0,8 à 1,2 Ncm selon le pouvoir d'absorption des blocs maçonnés avec celui-ci.
